# EUROPEAN PATENT SPECIFICATION

(11) **EP 0 572 250 B1**
(45) Date of publication and mention of the grant of the patent: **12.08.1998**
(21) Application number: 93304112.1
(22) Date of filing: 27.05.1993
(51) Int. Cl.: G09G 3/36

(54) **Liquid crystal display driving system**
Steuersystem für eine Flüssigkristallanzeigevorrichtung
Procédé de commande pour affichage à cristaux liquides

(30) Priority: 27.05.1992 JP 135143/92
(43) Date of publication of application: 01.12.1993
(73) Proprietor: KABUSHIKI KAISHA TOSHIBA, Kawasaki-shi, Kanagawa-ken 210 (JP); TOSHIBA AVE CO., LTD, Minato-ku, Tokyo 105 (JP)
(72) Inventor: Tsuzuki, Yoshiji, c/o Intellectual Property Div., Minato-ku, Tokyo (JP); Sakamoto, Tsutomu, c/o Intellectual Property Div., Minato-ku, Tokyo (JP)
(74) Representative: O'Connell, David Christopher

(56) References cited:
- EP-A- 441 692
- EP-A- 461 928
- PATENT ABSTRACTS OF JAPAN vol. 14, no. 437 (E-0980)19 September 1990 & JP-A-2 170 784 ( SHARP ) 2 July 1990
- PATENT ABSTRACTS OF JAPAN vol. 14, no. 286 (P-1064)20 June 1990 & JP-A-2 084 685 ( TOSHIBA ) 26 March 1990

## Description

The present invention relates generally to a liquid crystal display driving system.

Because of advantages of small size, light weight and low power consumption, liquid crystal display panels have been adopted on various kinds of displays in recent years. For television video display, high resolution liquid crystal display panels with more than 400 pixels in the vertical direction have been used recently. The liquid crystal has a capacitance and a holding time of written signals is relatively long. Because of this, if an interlace scanning system is adopted, the first and the second fields may be displayed simultaneously, causing a picture to show a shift. Further, if the interlace scanning system is used, it becomes necessary to drive a liquid crystal for each frame with AC power and a conspicuous flickering can result.

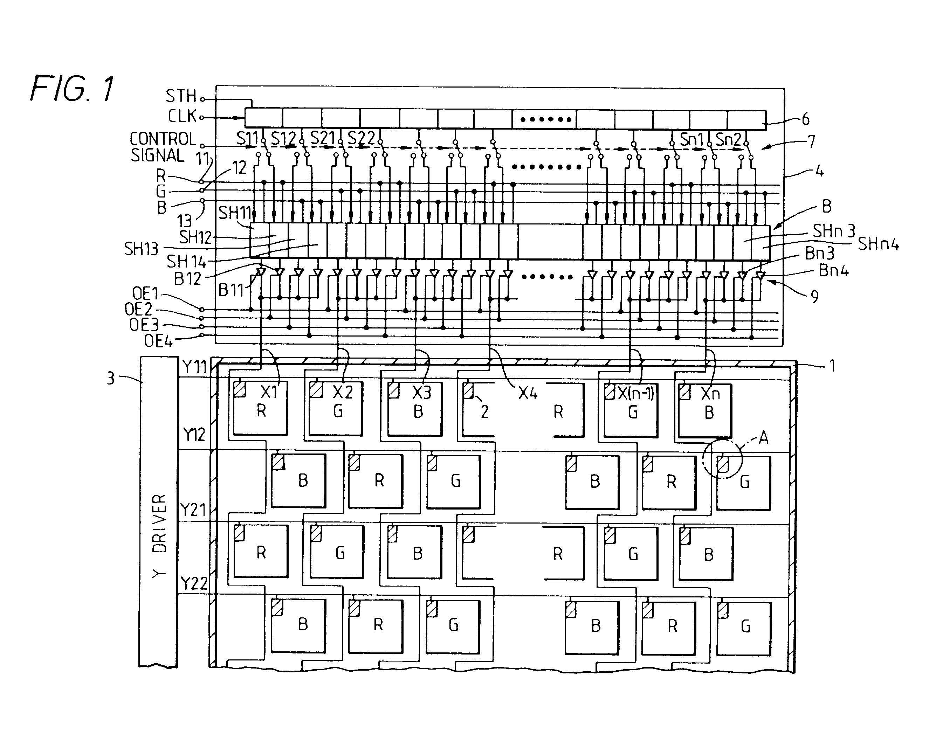

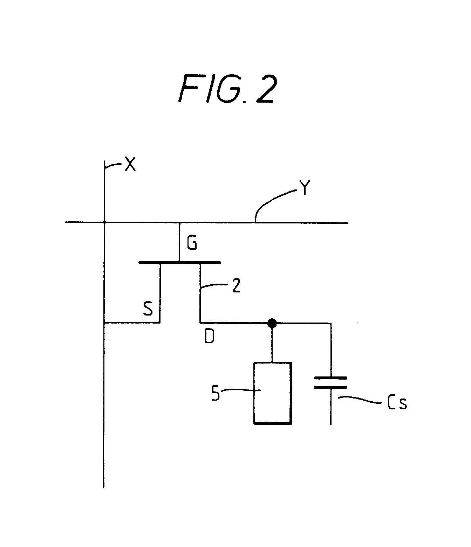

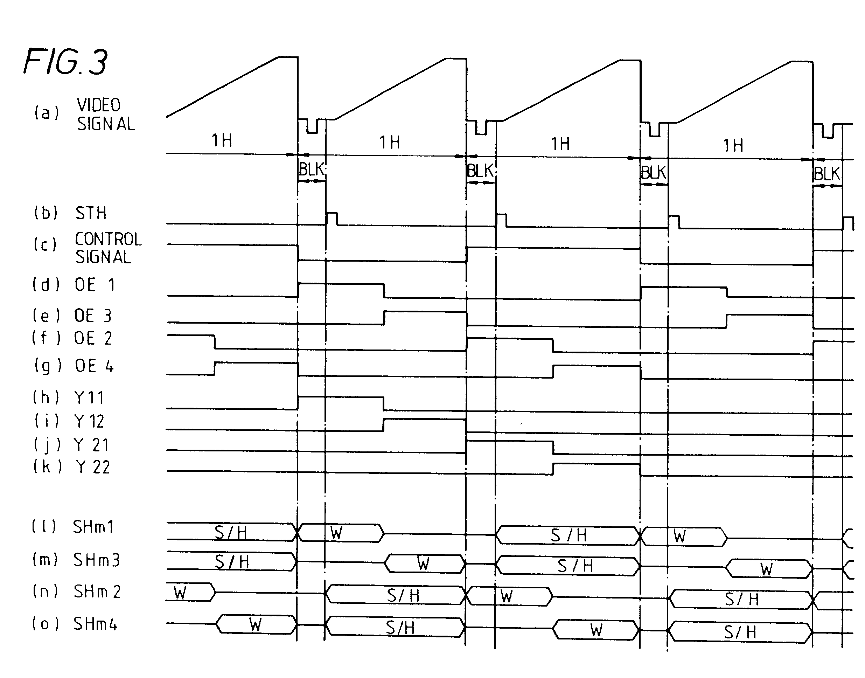

Therefore, a liquid crystal display driving system employing a double-speed scanning system using a line memory might be adopted so far to display one picture in one field (the full-line driving), FIGURE 1 is an explanatory diagram showing a conventional liquid crystal display driving system employing such a double-speed line sequential scanning system with the pixels arranged in a delta shape. FIGURE 2 is an explanatory diagram schematically showing Section A encircled in FIGURE 1. Further, FIGURE 3 is a timing chart for explaining the operation of this liquid crystal display driving system. FIGURE 3(a) shows a video signal, FIGURE 3(b) shows a start signal (hereinafter referred to as STH pulse), FIGURE 3(c) shows a control signal, FIGURES 3(d) through 3(g) show 1st, 3rd, 2nd and 4th output enable signals (hereinafter referred to as the OE1, OE3, OE2 and OE4 signals), respectively, FIGURES 3(h) through 3(k) show the state of the gate lines Y11, Y12, Y21 and Y22, respectively, and FIGURES 3(1) through 3(o) show the operating state of the sample-hold circuits SHml, SHm3, SHm2 and SHm4 (m = 1, 2, ....., n) respectively. Further, S/H in FIGURE 3 shows the sample-hold operation and W shows the write operation to the data lines.

In FIGURE 1, a liquid crystal cell 1 is constructed by filling twist nematic liquid crystal (not shown) between a pair of plate glasses (not shown). A common electrode is formed on one of the plate glasses, and gate lines Y (Y11, Y12, Y21, Y22, .....) and n pieces of data lines X (X1 through Xn) are formed on the other plate glass, and pixel electrodes (not shown) are formed on the intersections of the gate lines Y and the data lines X. Pixels are arranged in the matrix shape at the intersections of the gate lines Y and the data lines X with a thin film transistor (TFT) 2 shown in FIGURE 2 provided to each of the pixels. A gate signal is supplied to a gate G of each TFT 2 from a gate line controller 3 (hereinafter referred to as the Y driver) through the gate line Y and video signal sampling voltage from a data line driving circuit (hereinafter referred to as the X driver) 4 is supplied to a source S through the data line X, and a drain D is connected to the pixel electrode. A liquid crystal capacitance is generated by a liquid crystal 5 which is formed between the pixel electrode and the common electrode. Further, an auxiliary capacitor Cs is provided in parallel with the liquid crystal capacitance. The TFT 2 is turned ON by a high level (hereinafter referred to as "H") gate signal from the gate line Y to apply video signal sampling voltage from the data line X to the pixel electrode. As a result, a liquid crystal comprising the pixels is driven to display a picture.

The liquid crystal cell 1 has adopted the delta arrangement of liquid crystal pixels of odd lines and even lines with half of the pixels shifted in the horizontal scanning direction, as shown in FIGURE 1, and the number of lines has been so set that they are sufficient enough to display video signals for one frame of a broadcasting system. As described above, video signals are supplied simultaneously to two lines of the liquid crystal cell 1 in one horizontal (1H) period and, as shown in FIGURES 3(h) through 3(k), the Y driver 3 makes two gate lines Y11 and Y12, and Y21 and Y22, ..... to "H" sequentially in one horizontal period. Thus, video signals are written for all pixels in one field period.

In order to write video signals for pixels of the odd lines and pixels of the even lines through independent data lines X, it is necessary to make the number of data lines to two times the number of pixels in the horizontal direction and as a result, the number of data lines will increase, making it difficult to manufacture liquid crystals. For this reason, video signals are supplied to the pixels for the odd lines and the even lines which are shifted by half pixels through the same data lines X, as shown in FIGURE 1. Further, R, G and B in FIGURE 1 show the arrangement of R (red), G (green) and B (blue) color filters.

The X driver 4 is composed of a shift register 6, a switch group 7, a sample-hold circuit group 8 and a buffer amplifier group 9. When supplied with the start pulse STH (FIGURE 3(b)) showing the start of the horizontal display period, the shift register 6 outputs ON pulse as the pulses are turned ON sequentially from the first bit at a timing in synchronism with clock CLK. Further, the clock CLK is set to a frequency based on two times of the number of pixels in the horizontal direction of the liquid crystal 1. The switches S11, S12 through Snl, Sn2 of the switch group 7 output ON pulse to the sample-hold circuit group 8 under the control of the control signal (FIGURE 3(c)).

The sample-hold circuit group 8 is composed of 4n pieces of sample-hold circuits SH (SH11 through SH14, SH21 through SH24, ..... SHn1 through SNn4), and each sample-hold circuit SH samples three primary color video signals R, G and B, which are input through the terminals 11 through 13, at the ON pulse timing from the switch group 7 and holds them. The sample-hold circuits SH supply the video signals they are holding to buffer amplifiers B (B11 through B14, B21 through B24, ....., Bn1 through Bn4) of the buffer amplifier group 9. When turned ON by the OE1, OE2, OE3 and OE4 signals, the buffer amplifier B supplies video signals from the sample-hold circuit SH to the data lines X1 through Xn and executes the write to the pixels of the liquid crystal 1.

If one sample-hold circuit is used for one pixel of the liquid crystal 1, it becomes necessary to perform the write to the pixels within the horizontal blanking period (BLK) because it is needed to stagger the sample-hold period and the write to pixels each other. That is, it is necessary to write video signals from two sample-hold circuits to two pixels of the odd lines and even lines through one data line within one horizontal blanking period. Accordingly, the write to one pixel must be performed in a half time (about 5 µ sec.) of one horizontal blanking period. In such a short time, the write cannot be carried out sufficiently because of a time constant of liquid crystal, and the contrast will become indistinct. For this reason, in FIGURE 1, two sample-hold circuits are provided for one pixel, enabling it to switch the read and write, thus providing a sufficient write time for liquid crystal.

The sample-hold circuits SH11 and SH12 correspond to the pixels on the first row of the odd lines of the liquid crystal 1, while the sample-hold circuits SH13 and SH14 correspond to the pixels on the first row of the even line of the liquid crystal 1. Similarly, the sample-hold circuits SHm1, SHm2 (m = 1, 2, ..., n) correspond to the m the row of the odd lines and the sample-hold circuits SHm3 and SHm4 correspond to the m th row of the even lines of the liquid crystal 1. If the sample-hold circuits SHml and SHm3 hold video signals within the prescribed horizontal scanning period by the ON pulse from the switches Sm1 and Sm2 as shown in FIGURES 3(1) through 3(o), the sample-hold circuit SHm2 performs the write to the pixels of the odd lines in the first half of the one horizontal scanning period and the sample-hold circuit SHm4 performs the write to the pixels of the even lines in the latter half of the one horizontal scanning period according to the OE2 and the OE4 signals shown in FIGURES 3(f) and 3(g), respectively, On the contrary, if the sample-hold circuits SHml and SHm4 hold video signals in a prescribed horizontal period, the sample-hold circuit SHm1 performs the write to the pixels of the odd lines in the first half of one horizontal period and the sample-hold circuit SHm3 performs the write to the pixels of the even lines in the latter half of one horizontal period.

As a result, the circuits shown in FIGURE 1 are provided with sufficient times for write. However, as two sample-hold circuits are used for one pixel, the size of the liquid crystal display will become large. In particular, the sample-hold circuits have capacities and if they are integrated, an extremely large space is required and a large size and high cost will result.

So, the applicant of the present application has proposed a method to solve these problems in the Japanese Patent Application (TOKU-GAN-HEI) 2-84685. FIGURE 4 is an explanatory diagram for explaining the method.

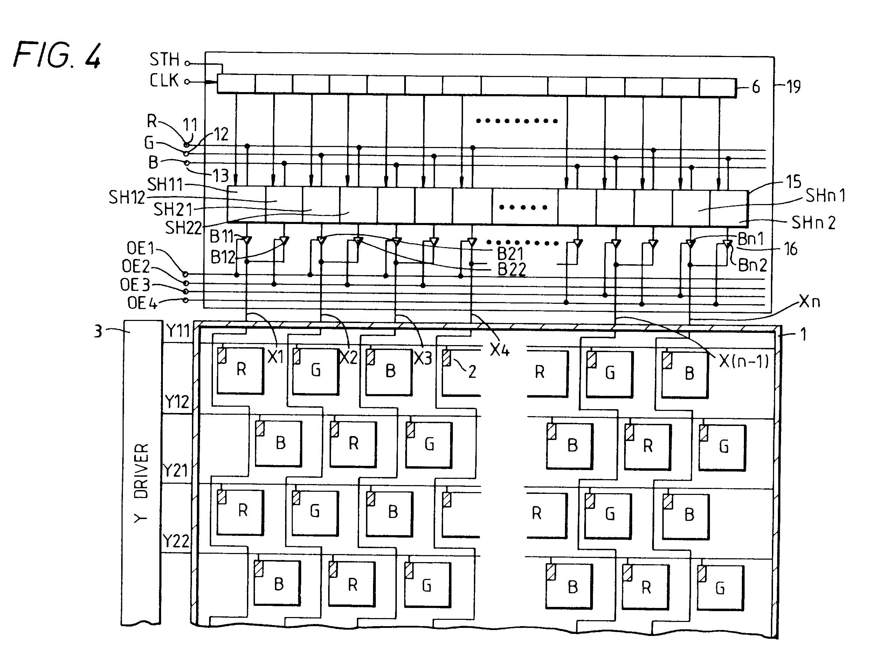

FIGURE 4 shows the construction of the X driver which, differing from the conventional liquid crystal display driving system shown in FIGURE 1, is provided with the sample-hold circuits and the buffer amplifiers corresponding to the pixels of the liquid crystal cell 1 on the one-for-one basis. That is, an X driver 19 is composed of the shift register 6, the sample-hold circuit group 15 and the buffer amplifier group 16. The outputs of all bits of the shift resister 6 are applied to the sample-hold circuits SH-(SH11, SH12, SH21, SH22, ..... SHn1, SHn2) of the sample-hold circuit group 16. The sample-hold circuits SH sample the primary color signals R, G and H which are input through the terminals 11 through 13 at the ON pulse timing from the shift register 6 and hold them. The outputs of the sample-hold circuits SH11 and SH12 are applied to the data line X1 through the buffer amplifiers B11 and B12, respectively. Similarly, the outputs of the sample-hold circuits SHm1 and SHm2 (m = 1, 2, ....., n) are applied to the data lines Xm through the buffer amplifiers Bml, and Bm2. The buffer amplifiers B11, B12, ....., Bn1, Bn2 are turned ON by the OE1 through the OE4 signals and apply the output of the sample-hold circuit SH to the data lines X.

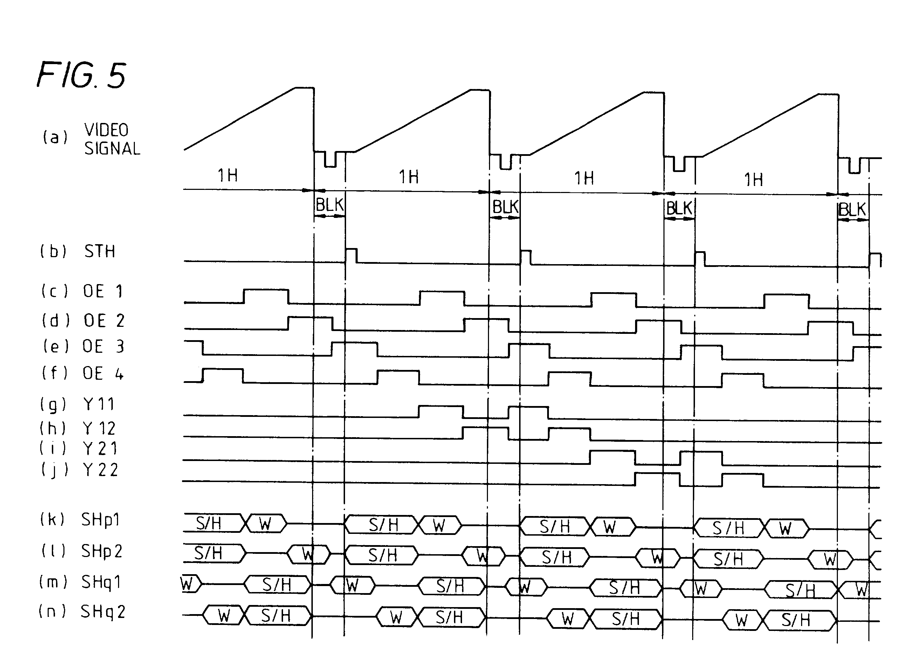

The operation of a conventional embodiment shown in FIGURE 4 will now be explained with reference to the timing chart, as shown in FIGURE 5.

When the start signal STH (FIGURE 5(b)) generated at the start timing of the horizontal scanning period is input, the shift register 6 shifts ON pulse by one bit at a time in the clock CLK period and applies them to the sample-hold circuit SH. As a result, the sample-hold circuits SHp1 and SHp2 (p = 1, 2, ..... n/2) sample and hold video signals in the first half of the horizontal scanning period, as shown in FIGURES 5(k) and 5(1), and the sample-hold circuits SHq1 and SHq2 (q = n/2 + 1, ..... n) sample and hold video signals in the latter half of the horizontal scanning period, as shown in FIGURES 5(m) and 5(n).

On the other hand, as shown in FIGURE 5(c), the OE1 signal becomes "H" for the period of 1/4 of 1H from the latter half of the horizontal scanning period and the sample-hold circuit SHp1 applies the holding video signals to the data line Xp through the buffer amplifier Bp1 during this period. On the other hand, the Y driver 3 applies "H" gate signal to the gate line Y11 during this period (FIGURE 5(g)) and as a result, the video signals are written for the pixels corresponding to the left side of the first line on the screen of the liquid crystal 1 (FIGURE 5(K)).

After the period of H/4 has elapsed from the latter half of the horizontal scanning period, the OE2 signal becomes "H" for the period of H/4 instead of the OE1 signal (FIGURE 5(d)). As a result, the video signals held by the sample-hold circuit SHp2 is supplied to the data line Xp through the buffer amplifier Bp2. During this period, the gate line Y12 is kept at "H" (FIGURE 5(h)) by the gate signal from the Y driver 3, and the video signals are written for the pixels corresponding to the left side of the second line on the screen of the liquid crystal 1 (FIGURE 5(1)).

Further, as shown in FIGURE 5(e), when the OE2 signal changes from "H" to "L", the OE3 signal becomes "H" only for the period of H/4 hour, During the period when the OE3 signal is "H", the gate line Y12 also becomes "H" and the video signals from the sample-hold circuit SHq1 are written for the pixels corresponding to the right side of the first line on the screen of the liquid crystal 1 through the buffer amplifier Hq1 and the data line Zq (FIGURE 5(m)). Further, when the OE3 signal returns to "L", the OE4 signal becomes "H" for the period of H/4 (FIGURE 5(f)) for the OE3 signal. Then, the sample-hold circuit SHq2 applies the video signals to the data line Xq through the buffer amplifier Bq2 and the video signals are written for the pixels corresponding to the right side of the second line on the screen of the liquid crystal 1 (FIGURE 5(n)). Thereafter, the similar operation is carried out repeatedly.

Thus, the video signals corresponding to the pixels at the left side of the screen, which are sampled and held by the sample-hold circuits SHp1 and SHp2, are written in the H/4 period from the latter half of the horizontal scanning period, respectively after the end of the sample-hold and the video signals corresponding to the right side of the screen, which are sampled and held by the sample-hold circuits SHq1 and SHq2, are written in the H/4 period, respectively after the end of the sample-hold. The sample-hold of video signals are carried out by the sample-hold circuits corresponding to the pixels on the one-for-one basis in a sufficient time for writing to the pixels.

However, the data line X has a relatively large floating capacitance. Actually, therefore, the video signals from the buffer amplifier B are first held by the data line X and then are written for the pixels. That is, even when the buffer amplifier is turned OFF, the video signals are written for the pixels by the floating capacitance of the data line. Now, it is assumed that, for instance, the OE1 signal is held at "H" and the gate line 21 is also held at "H". In this case, the video signals from the sample-hold circuit SHpl are written for the pixels at the left side of the screen as described above. However, as the gate line 21 is kept at "H", the TFT of the pixels of the third line at the right side of the screen is also turned ON and the video signals being held by the data line Xq of the right side of the screen are written for these pixels.

Originally, when writing the video signals from the sample-hold circuit SHpl for the pixels at the left half of the screen, the video signals from the sample-hold circuit SHq1 must be written for the right half of the screen. However, as shown in FIGURES 5(c) through 5(f), the OE1, OE2, OE3 and OE4 signals become "H" sequentially and if the OE1 signal is kept at "H", the video signals being held by the data line Xq for the right side of the screen are the signals read by the OE4 signals, that is, they are the video signals from the sample-hold circuit SHq2. In other words, when the video signals from the sample-hold circuit SHp1 are written for the pixels at the left side of the screen, the video signals of the preceding line from the sample-hold circuit SHq2 are written for the pixels at the right side of the screen. Then, when the data line Y22 becomes "H", the same signals as those for the pixels of the third lines at the right half of the screen are written for the pixels of the fourth line at the right half of the screen. That is, there was such a problem that the same video signals were written for the pixels of three lines at the right half of the screen and thus, the resolution was lowered and the display became unnatural.

In a conventional liquid crystal display driving system described above, there was such a problem that the same video was displayed on three lines at the right half of the screen by the floating capacitance of the data line, thus reducing the resolution and making the display unnatural.

The present invention therefore seeks to provide a liquid crystal display driving system which is capable of providing a sufficient time for writing video signals without increasing the circuit size and of improving resolution and providing a natural display.

According to one aspect of the present invention, there is provided a liquid crystal display driving system, comprising:
a liquid crystal display unit which has a screen of matrix arrangement comprised of a plurality of pixels, data lines for driving the columns of the pixels, and scanning signal lines for driving the rows of the pixels;
means for supplying video signals to the pixels through the data lines;
a scanning signal line control means for supplying progressive scanning signals to the scanning signal lines;
a first sample-hold means for holding video signals for the pixels corresponding to odd rows on a first half side of the screen and for supplying the held video signals to the data lines corresponding to the first half side on the screen based on a first output directing signal;
a second sample-hold means for holding video signals for the pixels corresponding to even rows on the first half side of the screen and for supplying the held video signals to the data lines corresponding to the first half side on the screen based on a second output directing signal;
a third sample-hold means for holding video signals for the pixels corresponding to odd rows on a second half side of the screen and for supplying the held video signals to the data lines corresponding to the second half side on the screen based on a third output directing signal; and
a fourth sample-hold means for holding video signals for the pixels corresponding to even rows on the second half side of the screen and for supplying the held video signals to the data lines corresponding to the second half side on the screen based on a fourth output directing signal;
characterised in that pixels in one side of each row receive scanning signals on a different scanning signal line from the scanning signal line which supplies scanning signals to pixels in the other side of said row.

Thus, in the present invention, the first and the second sample-hold means sample and hold the video signals corresponding to the pixels at the first half side of the screen, preferably in the first half of the horizontal scanning period, while the third and the fourth sample-hold means sample and hold the video signals corresponding to the pixels at the second half side of the screen, preferably in the second half of the horizontal scanning period. After the respective sampling and holding operations, the first through the fourth output directing signals are generated, the videb signals being held by the first through the fourth sample-hold means are applied to the data lines and held in the floating capacitance of the data lines and are written for the pixels. The timings for generating the first through the fourth output directing signals and the scanning signals are properly set to prevent the same video signals from being written into two lines.

For a better understanding of the present invention and many of the attendant advantages thereof reference will now be made by way of example to the accompanying drawings, wherein:
FIGURE 1 is an explanatory diagram showing a conventional liquid crystal display driving system;
FIGURE 2 is an explanatory diagram showing Section A of FIGURE 1;
FIGURE 3 is a timing chart for explaining the operation of an embodiment of the conventional liquid crystal display driving system shown in Fig. 1;
FIGURE 4 is an explanatory diagram showing another embodiment of the conventional liquid crystal display driving system;
FIGURE 5 is a timing chart for explaining the operation of the embodiment of the conventional liquid crystal display driving system shown in Fig. 4;
FIGURE 6 is an explanatory diagram showing the first embodiment of the liquid crystal display driving system of the present invention;
FIGURE 7 is an explanatory diagram showing the liquid crystal cell 21, as shown in FIGURE 6;
FIGURE 8 is a timing chart for explaining the operation of the first embodiment;
FIGURE 9 is an explanatory diagram showing the second embodiment of the present invention;
FIGURE 10 is a timing chart for explaining the operation of the second embodiment shown in FIGURE 9;
FIGURE 11 is an explanatory diagram showing the third embodiment of the present invention; and
FIGURE 12 is an explanatory diagram showing the liquid crystal cell and the Y driver in the third embodiment shown in FIGURE 11.

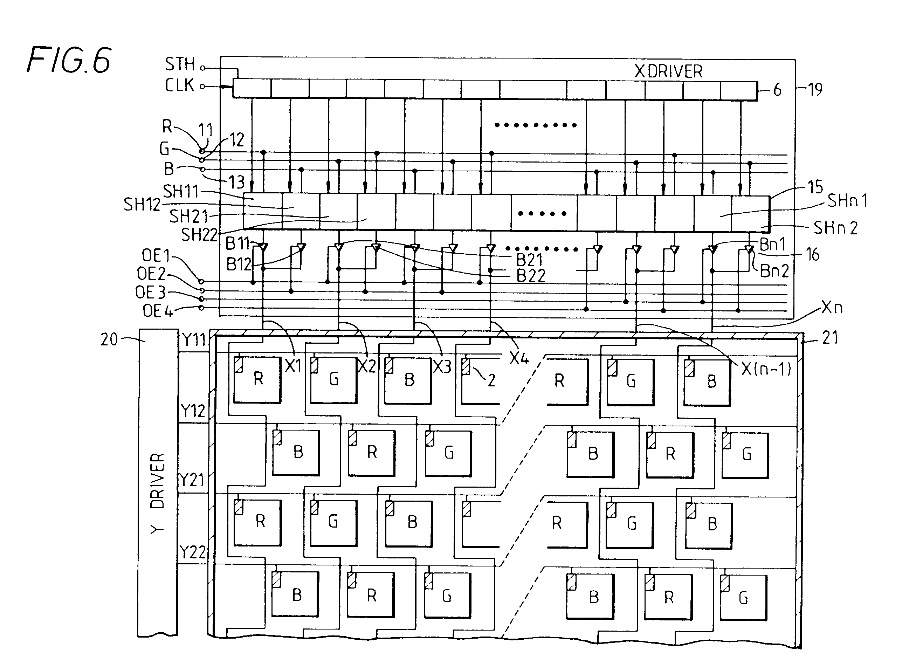

Embodiments of the present invention will be described in detail with reference to the FIGURES 6 through 12. Throughout the drawings, reference numerals or letters used in FIGURES 1 through 5 will be used to designate like or equivalent elements for simplicity of explanation.

Referring now to FIGURES 6, 7 and 8, a first embodiment of the liquid crystal display driving system according to the present invention will be described in detail.

FIGURE 6 is an explanatory diagram showing the first embodiment of the liquid crystal display driving system of the present invention. In FIGURE 6, an X driver 19 is composed of shift register 6, a sample-hold circuit group 15 and a buffer amplifier group 16. The shift register 6 has the number of bits which are two times the number of pixels in the horizontal direction and takes in a start signal which is generated at the start timing of the horizontal scanning period and frequency clock CLK which is based on the two times of pixels in the horizontal direction. The shift register 6 starts to output ON pulse from the start signal and shifts the ON pulse output bits by one bit at a time in synchronism with the clock CLK. The ON pulse from each bit of the shift register 6 is applied to the sample-hold circuit SH (SH11, SH12, SH21, SH22, ..... SHn1, SHn2) of the sample-hold circuit group 15. The sample-hold circuits SH11, SH12, SH21, SH22, ....., SHn1, SHn2 are applied with color signals R, B, G, R, ..... and sample and hold these color signals at the timing of the ON pulse from the shift register 6.

The outputs of the sample-hold circuits SH11, SH12, SH21, SH22, ..... SHn1, SHn2 are applied to the buffer amplifiers B11, B12, B21, B22, ....., Bn1, Bn2, respectively. The buffer amplifiers Bp1 and Bp2 (p = 1, 2, ..... n/2) are applied with the OE1 signal or the OE2 signal, respectively, and are turned ON when the OE1 or the OE2 signal becomes "H" and apply the outputs of the sample-hold circuits SHp1 and SHp2 to the data lines Xp corresponding to the first half side, e.g., the left side of the liquid crystal cell 21. Further, the buffer amplifiers Bq1 and Bq2 (q = n/2 + 1, ..... n) are applied with the OE3 signal or the OE4 signal, respectively, and are turned ON when the OE3 or the OE4 signal becomes "H" and apply the outputs of the sample-hold circuits SHq1 and SHq2 to the data lines Xp corresponding to the second half side, e.g., the right side of the liquid crystal cell 21.

A Y driver 20 has the output terminals corresponding to the number of pixels in the vertical direction of the liquid crystal cell 21 and these output terminals are connected to the gate lines Y11, Y12, Y21, Y22, ..... of the liquid crystal cell 21. The Y driver 20 puts the output terminal connected to the gate line Y11 to the "H" level by a timing signal showing the start of the vertical scanning period and thereafter, by shifting the output terminals to make them "H" sequentially in the 1/2 horizontal period, applies the "H" level gate signal to all gate lines Y in one vertical scanning period.

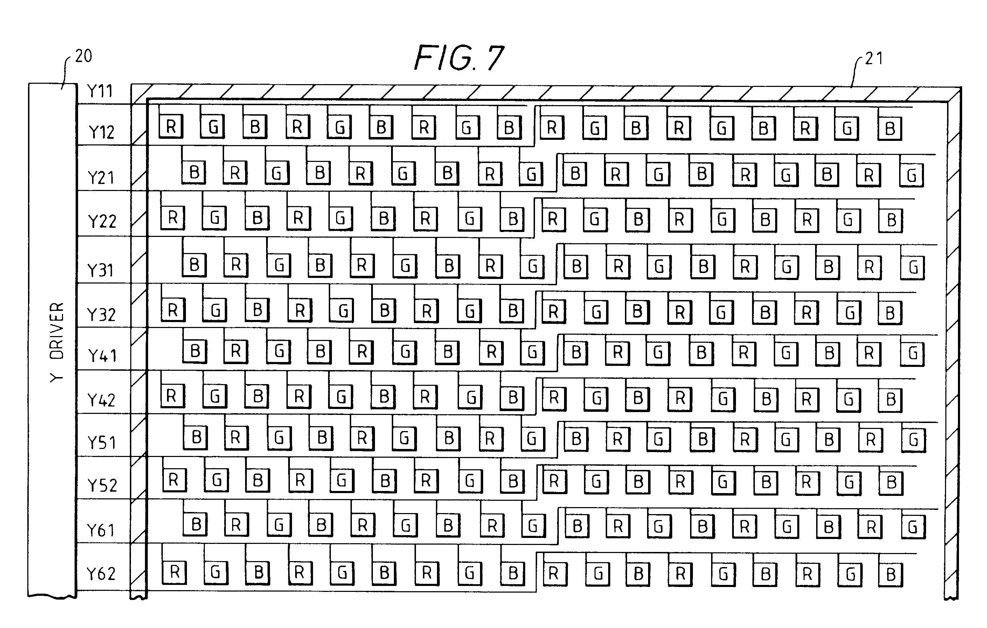

FIGURE 7 is an explanatory diagram for explaining the arrangement of the pixels of the liquid crystal cell 21, as shown in FIGURE 6.

The liquid crystal cell 21 has adopted to the delta arrangement where the odd line pixels and the even line pixels are shifted each other by half pixels in the horizontal direction. The color filters (not shown) are arranged in order of R, G, B, R, ..... for the odd lines, while they are arrange in order of B, R, G, B, ..... for the even lines. The pixels of the first row of these line are connected to the data lines X1 and similarly, the pixels of the m th row (m = 1, 2, ....., n) are connected to the data lines Xm (see FIGURE 6).

In this embodiment, the gate lines connected to the pixels at the left half of the liquid crystal 21 and the gate lines connected to the pixels at the right half are staggered each other by one line. That is, the pixels connected to the left half data lines Xp of the first line are connected to the gate lines Y11, while the pixels connected to the right half data lines Xq are connected to the gate lines Y12. Further, the pixels connected to the left half data lines Xp of the second line are connected to the gate lines Y12, while the pixels connected to the right half data lines Xq are connected to the data lines Y21. Thereafter, similarly, the pixels connected to the left half data lines Xp of the second J-1 (j = 1, 2, .....) are connected to the gate lines Yj1, while the pixels connected to the right half data lines Xq are connected to the gate line Yj2.

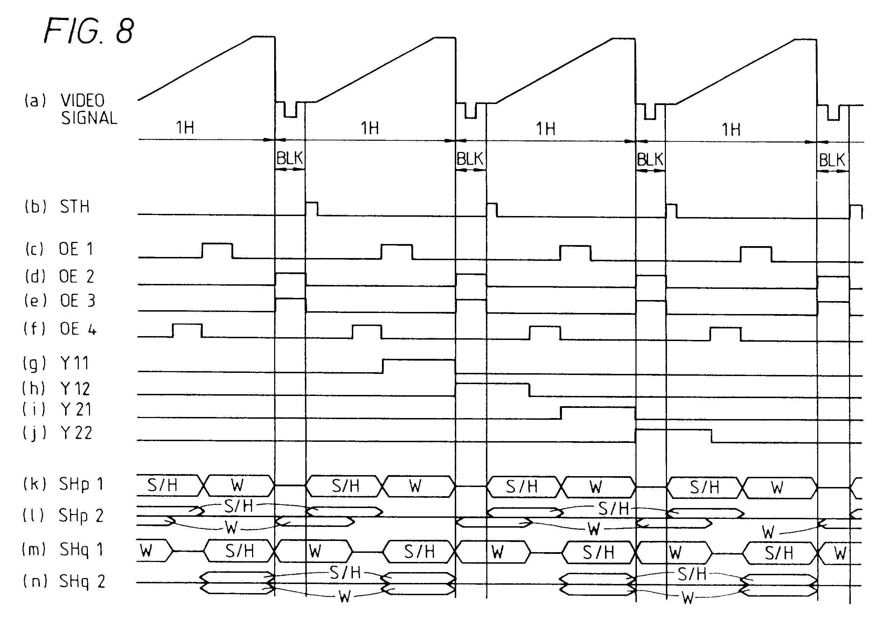

Next, the operation of this embodiment in the construction described above will be explained with reference to the timing chart, as shown in FIGURE 8. FIGURE 8(a) illustrates the video signal, FIGURE 8(b) illustrates the start signal STH, FIGURE 8(c) through 8(f) illustrate the OE1, OE2, OE3 and OE4 signals, FIGURES 8(g) through 8(j) illustrate the gate signals applied to the gate lines Y11, Y12, and Y22, FIGURES 8(k) and 8(1) illustrate the operations of the sample-hold circuits SHp1 and SHp2, respectively, FIGURES 8(m) and 8(n) illustrate the operations of the sample-hold circuits SHq1 and SHq2, respectively. In FIGURE 8, S/H indicates the sample-hold operation and W indicates the write operation to the pixels.

As shown in FIGURES 8(a) and 8(b), if the start signal is input to the shift register 6 at the start timing of the period for horizontal scanning of video signals, the shift register 6 shifts the ON pulse and applies it to the sample-hold circuit SH. The sample-hold circuits SHp1 and SHp2 (p = 1, 2, ....., n/2) sample and hold the video signals R, G and B sequentially (FIGURES 8(k), 8(1)). When the video signals are held by the sample-hold circuits SHp1 and SHp2 after the period of H/2 has passed, as shown in FIGURES 8(c), 8(g), the OE1 signal and the gate line Y11 become "H" and the video signals held in the sample-hold circuit SHp1 are applied to the data line Xp through the buffer amplifier Bp1 (FIGURE 8(k)). The OE1 signal becomes "H" for the time nearly equivalent to the horizontal blanking period (BLK), while the video signals are written in the floating capacitance of the data line Xp. While the gate line Y11 is kept at "H" (about 1/2 horizontal scanning period), the video signals from the data line Xp are written for the left half pixels of the first line connected to the gate line Y11. After the OE1 signal becomes "L", the video signals being held in the floating capacitance of the data line Xp are continuously written as long as the gate line Y11 is kept at "H".

If the gate line Y11 becomes "L" at the end of the horizontal scanning period, the OE2 signal become "H" in the horizontal blanking period (FIGURE 8(d)). As a result, the sample-hold circuit SHp2 applies the holding video signals to the data line Xp through the buffer amplifier Bp2. During this horizontal blanking period, the gate line Y12 also becomes "H", as shown in FIGURE 8(h) and the video signal applied to the data line Xp are written for the pixels at the left side of the second line. When the blanking period ends, the OE2 signal becomes "L" and the sample-hold circuit SHp2 holds the video signals in the first half of the horizontal scanning period. On the other hand, the gate line Y12 is kept at "H" during the about 1/2 horizontal scanning period. Therefore, the video signals being kept by the floating capacitance of the data line Xp are continuously written.

On the other hand, in the latter half of the horizontal scanning period, the color signals R, G and B are sampled and kept held by the sample-hold circuits SHq1 and SHq2. In the horizontal blanking period, the OE2 as well as the OE3 signals become "H" (FIGURE 8(e)). As a result, the sample-hold circuit SHq1 applies the holding video signals to the data line Xq to hold them in its floating capacitance and then, the video signals are written for to the left half pixels as well as the right half pixels connected to the gate line Y12 simultaneously.

As shown in FIGURES 5(f) and 5(h), if the gate line Y12 becomes "L", the OE4 signal becomes "H" in the first half of the horizontal scanning period for about the same time as in the horizontal blanking period. During the period when the OE4 signal is "H", the gate line Y21 is kept at "L". Therefore, the video signals for the even lines being held by the data line Xp will never be written for the left half pixels connected to the gate line Y21. If the OE4 signal becomes "L", the gate line Y21 becomes "H" only for the 1/2 horizontal scanning period and the video signals of the even lines being held in the floating capacitance of the data line Xq are written for the right half pixels together with the video signals of the odd lines applied to the data line Xp. Thereafter, the same operation is carried out repeatedly.

Thus, in this embodiment, the gate lines which are connected to the left half pixels and the right half pixels on the screen are staggered by one line, and the video signals are written for the left half pixels during the period when the video signals corresponding to the right half pixels are sampled and held, while the video signals are written for the right half pixels during the period when the video signals corresponding to the left half pixels are sampled and held, and the sample-hold operation of the sample-hold circuits and the write for the pixels are staggered by using the floating capacitance of the data lines so that the video signals of the preceding line being held in the floating capacitance of the data lines are prevented from being written for the pixels of the next lines.

Further, in this embodiment the shift register 1 has the number of bits which are two times the number of pixels per line but two registers each of which has the same number of bits as the number of pixels per line may be used to output ON pulses by providing operating clocks of which phases differ by 180 degrees each other to these registers by frequency corresponding to the number of pixels per line. Further, the sample-hold circuit group 15 may be divided into two groups of SH11, SH21, ..... SHn1 and SH12, SH22, ..... SHn2 to correspond to the left half and the right half of the screen, respectively. Further, the OE2 and the OE3 signals are commonly used and three kinds of OE signals may be used.

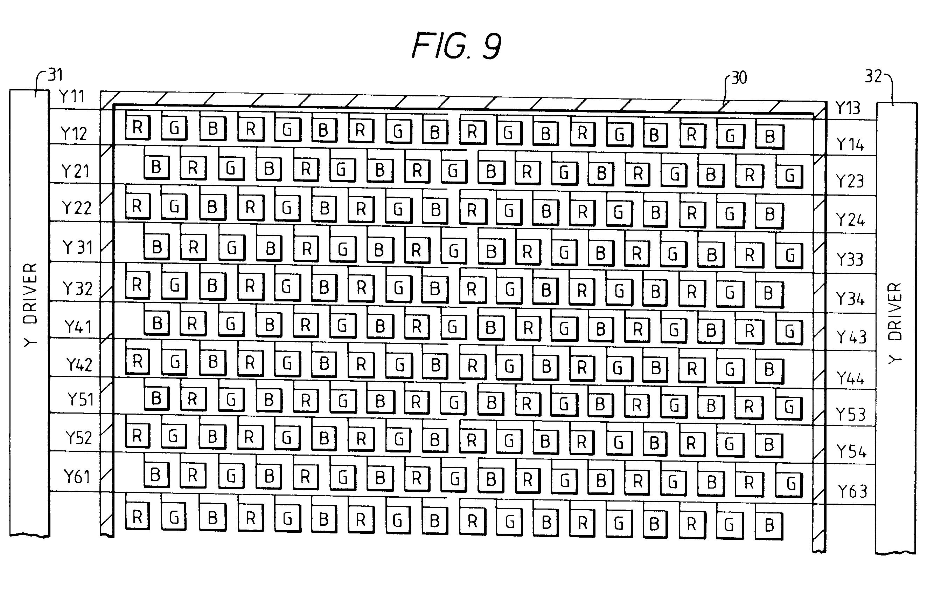

FIGURE 9 is an explanatory diagram for explaining the second embodiment of the present invention.

This embodiment differs from the first embodiment shown in FIGURE 6 in that this embodiment uses a liquid crystal cell 30 for the liquid crystal cell 21 and two Y drivers 31 and 32 for the Y driver 20. The liquid crystal cell 30 has adopted the delta arrangement using color filters and the pixels of the first through the n the rows are connected to the data lines X1 through Xn (not shown). The pixels of the left half lines of the liquid crystal cell 30 are connected to the gate lines Y11, Y12, Y21, Y22, ..... and the pixels of the right half lines are connected to the gate lines Y13, Y14, Y23, Y24 ..... The Y driver 31 applies the "H" gate signal to the gate lines Y11, Y12, Y21, Y22, ..... sequentially and the Y driver 32 applies the "H" gate signals to the gate lines Y13, Y14, Y23, Y24, ..... sequentially.

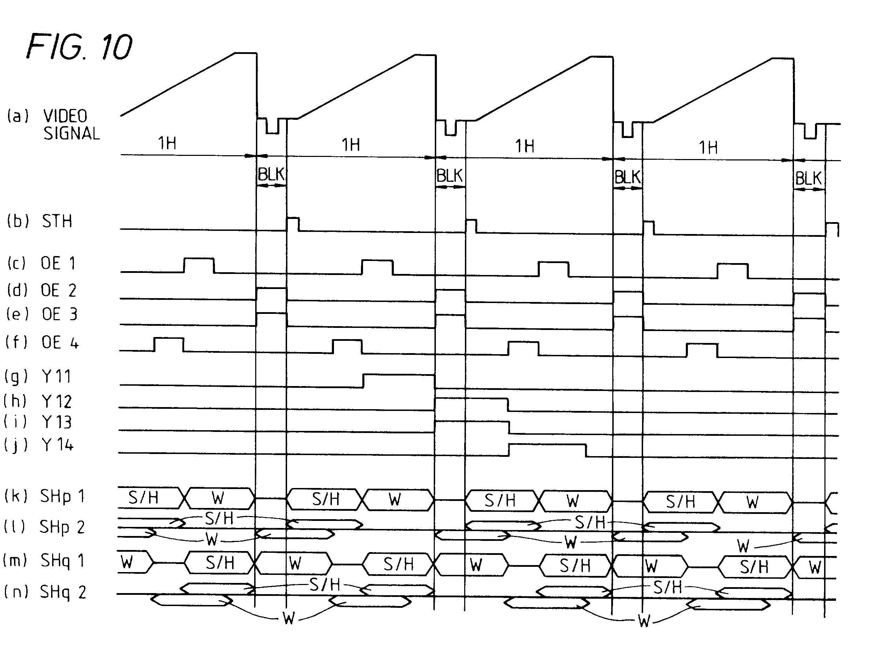

Next, the operation of the second embodiment in the construction described above will be explained with reference to the timing chart, as shown in FIGURE 10. FIGURE 10(a) illustrates the video signal, FIGURE 10(b) illustrates the start signal STH, FIGURES 10(c) through 10(f) illustrate the OE1 through the OE4 signals, respectively, FIGURES 10(g) through 10(j) illustrate the gate lines Y11, Y12, Y23, and Y14, respectively, FIGURES 10(k) through 10(1) illustrate the sample-hold circuits SHp1 and SHp2, respectively and FIGURES 10(m) and 10(n) illustrate the sample-hold circuits SHq1 and SHq2, respectively.

In this embodiment, the gate lines Y12 and Y13 have changed similarly. Further, the changes of the OE1, OE2 and OE3 signals and the gate lines Y11 and Y12 are the same as those in the first embodiment shown in FIGURE 1. The sample-hold and write operations of the video signals to the left half pixels and the right half pixels of the screen are the same as the first embodiment shown in FIGURE 6. The gate line Y14 becomes "H" simultaneously when the OE4 signal becomes "H". In this embodiment, the right half pixels and the left half pixels of the screen are driven by different gate lines. Therefore, even if the writing of video signals for the pixels for the even lines at the right half of the screen is started when the OE4 signal becomes "H", the video signals which are to be written for the preceding line will never be written for the pixels of the odd lines at the left half of the screen.

Other operations and effects are the same as the first embodiment shown in FIGURE 6.

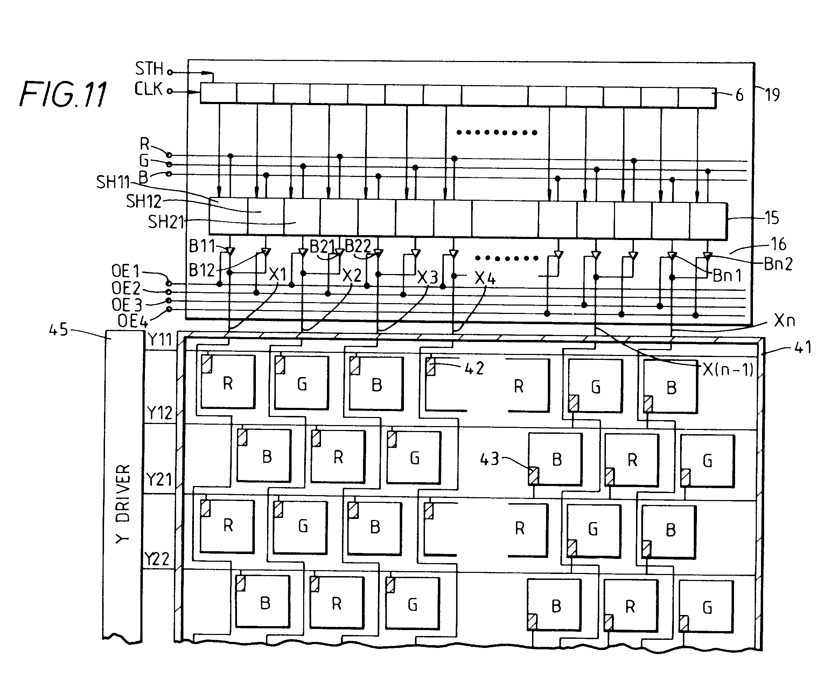

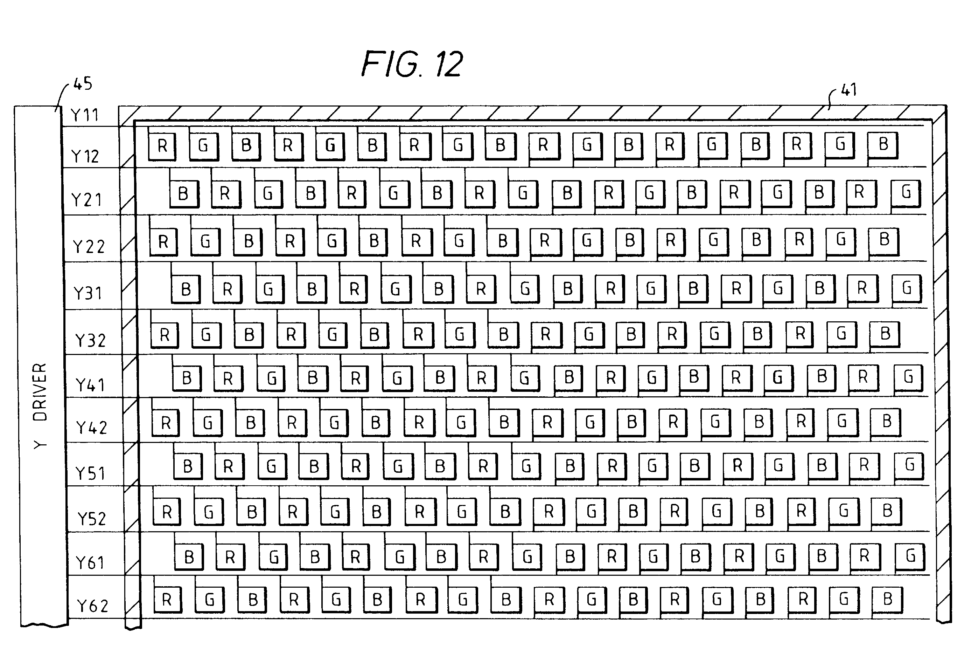

FIGURES 11 and 12 are explanatory diagrams for explaining the third embodiment of the present invention.

In this embodiment, the construction of a liquid crystal cell differs from the first embodiment shown in FIGURE 6. As shown in FIGURES 11 and 12, a liquid crystal cell 41 has adopted the delta arrangement and the data lines X1 through Xn are connected to the pixels of the first through the n th rows. A TFT 42 is formed for the left half pixels of the liquid crystal cell 41 and a TFT 43 is formed for the right half pixels. The gates of TFT 42 of the odd lines are connected to the gate lines Yj1 (j = 1, 2, .....) and the gates of TFT 42 of the even lines are connected to the gate lines Yj2. Further, the gates of TFT 43 of the odd lines are connected to the gate lines Yj2 and the gates of TFT 43 of the even lines are connected to the gate lines Y(j+1)1. That is, the left half pixels and the right half pixels of the screen are driven by the gate lines which are staggered by one line. A Y driver 45 supplies the "H" level gate signal to the gate lines Y11 and Y12, ..... sequentially.

In the embodiment in the construction as described above, the same scanning as in the first embodiment can be carried out. That is, the operation will be the same as that shown in the timing chart in FIGURE 8 and the same effect as in the first embodiment shown in FIGURE 6 can be obtained.

The present invention is not limited to the embodiments described above. The liquid crystal display panel of the delta arrangement having color filters was explained in the embodiments described above. However, it is also possible to apply the present invention to a liquid crystal display panel of the delta arrangement for monochromic display. Further, it is also effective if the arrangement of color filters differs for odd lines and even lines when the present invention is applied to a liquid crystal display panel of the grid arrangement, which is provided with color filters.

As described above, the present invention can provide an extremely preferable liquid crystal display driving system. That is, the liquid crystal display driving system according to the present invention has such an effect that a sufficient write time is obtained without increasing the circuit size and resolution can be improved, thus providing a natural display.

While there have been illustrated and described what are at present considered to be preferred embodiments of the present invention, it will be understood by those skilled in the art that various changes and modifications may be made, and equivalents may be substituted for elements thereof without departing from the scope of the present invention. In addition, many modifications may be made to adapt a particular situation or material to the teaching of the present invention without departing from the scope thereof. Therefore, it is intended that the present invention not be limited to the particular embodiment disclosed as the best mode contemplated for carrying out the present invention, but that the present invention include all embodiments falling within the scope of the appended claims.

## Claims

1. A liquid crystal display driving system, comprising:
a liquid crystal display unit which has a screen of matrix arrangement comprised of a plurality of pixels, data lines (Xp, Xq) for driving the columns of the pixels, and scanning signal lines (Y) for driving the rows of the pixels;
means for supplying video signals to the pixels through the data lines (Xp, Xq);
a scanning signal line control means for supplying progressive scanning signals to the scanning signal lines;
a first sample-hold means (SHpl) for holding video signals for the pixels corresponding to odd rows on a first half side of the screen and for supplying the held video signals to the data lines corresponding to the first half side on the screen based on a first output directing signal;
a second sample-hold means (SHp2) for holding video signals for the pixels corresponding to even rows on the first half side of the screen and for supplying the held video signals to the data lines corresponding to the first half side on the screen based on a second output directing signal;
a third sample-hold means (SHql) for holding video signals for the pixels corresponding to odd rows on a second half side of the screen and for supplying the held video signals to the data lines corresponding to the second half side on the screen based on a third output directing signal; and
a fourth sample-hold means (SHq2) for holding video signals for the pixels corresponding to even rows on the second half side of the screen and for supplying the held video signals to the data lines corresponding to the second half side on the screen based on a fourth output directing signal;
characterised in that pixels in one side of each row receive scanning signals on a different scanning signal line from the scanning signal line which supplies scanning signals to pixels in the other side of said row.

2. A liquid crystal display driving system as claimed in claim 1, characterised in that the scanning signal line which supplies scanning signals to one side of one row of pixels also supplies scanning signals to the other side of an adjacent row of pixels.

3. A liquid crystal display driving system as claimed in claim 1, characterised in that each scanning signal line only supplies scanning signals to pixels in one side of one row.

4. A liquid crystal display driving system as claimed in claim 1, 2 or 3, further comprising respective buffer amplifiers (Bp1, Bp2, Bq1, Bq2) for receiving signals from the sample-hold means and supplying the signals to the data lines.

## Patentansprüche

1. Flüssigkristallanzeigen-Treibersystem, umfassend:
eine Flüssigkristall-Anzeigeeinheit, die einen als Matrix angeordneten Bildschirm aufweist, bestehend aus einer Anzahl Pixel, aus Datenleitungen (Xp, Xq) zum Ansteuern der Pixelspalten und aus Abtastsignalleitungen (Y) zum Ansteuern der Pixelzeilen;
eine Vorrichtung zum Einspeisen von Videosignalen in die Pixel über die Datenleitungen (Xp, Xq);
eine Abtastsignalleitungs-Steuervorrichtung zum Einspeisen von fortschreitenden Abtastsignalen in die Abtastsignalleitungen;
eine erste Abtast-Halte-Einrichtung (SHp1) zum Halten von Videosignalen für die Pixel, die den ungeraden Zeilen auf einer ersten halben Seite des Bildschirms entsprechen, und zum Einspeisen der gehaltenen Videosignale abhängig von einem ersten Ausgabeanweisungssignal in die Datenleitungen, die der ersten halben Seite auf dem Bildschirm entsprechen;
eine zweite Abtast-Halte-Einrichtung (SHp2) zum Halten von Videosignalen für die Pixel, die den geraden Zeilen auf der ersten halben Seite des Bildschirms entsprechen, und zum Einspeisen der gehaltenen Videosignale abhängig von einem zweiten Ausgabeanweisungssignal in die Datenleitungen, die der ersten halben Seite auf dem Bildschirm entsprechen;
eine dritte Abtast-Halte-Einrichtung (SHq1) zum Halten von Videosignalen für die Pixel, die den ungeraden Zeilen auf einer zweiten halben Seite des Bildschirms entsprechen, und zum Einspeisen der gehaltenen Videosignale abhängig von einem dritten Ausgabeanweisungssignal in die Datenleitungen, die der zweiten halben Seite auf dem Bildschirm entsprechen; und
eine vierte Abtast-Halte-Einrichtung (SHq2) zum Halten von Videosignalen für die Pixel, die den geraden Zeilen auf der zweiten halben Seite des Bildschirms entsprechen, und zum Einspeisen der gehaltenen Videosignale abhängig von einem dritten Ausgabeanweisungssignal in die Datenleitungen, die der zweiten halben Seite auf dem Bildschirm entsprechen,
dadurch gekennzeichnet, daß die Pixel auf einer Seite einer jeden Zeile Abtastsignale auf einer Abtastsignalleitung empfangen, die von der Abtastsignalleitung verschieden ist, die die Abtastsignale für Pixel auf der anderen Seite der Zeile zuführt.

2. Flüssigkristallanzeigen-Treibersystem nach Anspruch 1, dadurch gekennzeichnet, daß die Abtastsignalleitung, die einer Seite einer Pixelzeile Abtastsignale zuführt, auch der anderen Seite einer benachbarten Pixelzeile Abtastsignale zuführt.

3. Flüssigkristallanzeigen-Treibersystem nach Anspruch 1, dadurch gekennzeichnet, daß jede Abtastsignalleitung nur Pixeln in einer Seite einer Zeile Abtastsignale zuführt.

4. Flüssigkristallanzeigen-Treibersystem nach Anspruch 1, 2 oder 3, zudem umfassend jeweilige Pufferverstärker (Bp1, Bp2, Bq1, Bq2), die Signale aus der Abtast-Halte-Einrichtung empfangen und die Signale in die Datenleitungen einspeisen.

## Revendications

1. Un dispositif de commande pour affichage à cristaux liquides comprenant :
une unité d'affichage à cristaux liquides qui présente un écran à disposition matricielle se composant d'un ensemble de pixels, de lignes de données (Xp, Xq) pour piloter les colonnes de pixels, et de lignes de signaux de balayage (Y) pour piloter les rangées de pixels ;
des moyens pour fournir des signaux vidéo aux pixels par l'intermédiaire des lignes de donnée (Xp, Xq) ;
un moyen de commande des lignes de signaux de balayage pour fournir des signaux de balayage progressifs aux lignes de signaux de balayage ;
un premier moyen d'échantillonnage et de maintien (SHp1) pour maintenir des signaux vidéo pour les pixels correspondant à des rangées impaires sur un premier demi côté de l'écran et pour fournir les signaux vidéo maintenus aux lignes de données correspondant au premier demi côté de l'écran sur la base d'un premier signal de direction de sortie ;
un second moyen d'échantillonnage et de maintien (SHp2) pour maintenir des signaux vidéo pour les pixels correspondant à des rangées paires sur le premier demi côté de l'écran et pour fournir les signaux vidéo maintenus aux lignes de données correspondant au premier demi côté de l'écran sur la base d'un second signal de direction de sortie ;
un troisième moyen d'échantillonnage et de maintien (SHq1) pour maintenir des signaux vidéo pour les pixels correspondant à des rangées impaires sur un second demi côté de l'écran et pour fournir les signaux vidéo maintenus aux lignes de données correspondant au second demi côté de l'écran sur la base d'un troisième signal de direction de sortie ; et
un quatrième moyen d'échantillonnage et de maintien (SHq2) pour maintenir des signaux vidéo pour les pixels correspondant à des rangées paires sur le second demi côté de l'écran et pour fournir les signaux vidéo maintenus aux lignes de données correspondant au second demi côté de l'écran sur la base d'un quatrième signal de direction de sortie ;
caractérisé en ce que les pixels d'un côté de chaque rangée reçoivent des signaux de balayage sur une ligne de signaux de balayage différant de la ligne de signaux de balayage qui fournit des signaux de balayage aux pixels de l'autre côté de ladite rangée.

2. Un dispositif de commande pour affichage à cristaux liquides tel que revendiqué à la revendication 1, caractérisé en ce que la ligne de signaux de balayage qui fournit des signaux de balayage à un côté d'une rangée de pixels fournit également des signaux de balayage à l'autre côté d'une rangée adjacente de pixels.

3. Un dispositif de commande pour affichage à cristaux liquides tel que revendiqué à la revendication 1, caractérisé en ce que chaque ligne de signaux de balayage fournit seulement des signaux de balayage aux pixels d'un côté d'une rangée.

4. Un dispositif de commande pour affichage à cristaux liquides tel que revendiqué à la revendication 1, 2 ou 3, comprenant en outre des amplificateurs tampons respectifs (Bp1, Bp2, Bq1, Bq2) pour recevoir des signaux provenant des moyens d'échantillonnage et de maintien et fournir les signaux aux lignes de données.
